# EUROPEAN PATENT SPECIFICATION

(11) **EP 3 060 518 B1**
(45) Date of publication and mention of the grant of the patent: **06.09.2017**
(21) Application number: 13780165.0
(22) Date of filing: 24.10.2013
(51) Int. Cl.: C01B 17/765, C01B 17/80, F01K 17/06, F01K 23/06

(54) **PROCESS FOR OPERATING A SULFURIC ACID PLANT**
VERFAHREN ZUM BETRIEB EINER SCHWEFELSÄUREANLAGE
PROCÉDÉ DE FONCTIONNEMENT D'UNE INSTALLATION DE FABRICATION D'ACIDE SULFURIQUE

(43) Date of publication of application: 31.08.2016
(73) Proprietor: Outotec (Finland) Oy, 02230 Espoo (FI)
(72) Inventor: Daum, Karl-Heinz, 55124 Mainz (DE); Storch, Hannes, 61381 Friedrichsdorf (DE); Neumann, Ralf, 61250 Usingen (DE); Schalk, Wolfram, 61352 Bad Homburg (DE)
(74) Representative: Keil & Schaafhausen Patent- und Rechtsanwälte PartGmbB
(86) International application number: PCT/EP2013/072309
(87) International publication number: WO 2015/058804

(56) References cited:
- WO-A1-2008/064698
- WO-A2-2011/091950
- US-A1- 2013 115 159

## Description

### Field of the Invention

The present invention relates to a process for operating a plant for the production of sulfuric acid, wherein a sulfur trioxide containing gas is supplied to an intermediate absorption system or to a final absorber to be at least partly absorbed in sulfuric acid, wherein the intermediate absorption system comprises a 1^{st} stage cocurrent absorber and a 2^{nd} stage countercurrent absorber, and wherein the plant further comprises a heat recovery system to produce low pressure steam by using the heat generated by the exothermic absorption of the sulfur trioxide in the sulfuric acid.

Sulfuric acid usually is produced by the so-called double absorption process as it is described in Ullmann's Encyclopedia of Industrial Chemistry, 5th edition, vol. A25, pages 635 to 700. Sulfur dioxide (SO₂) obtained as waste gas of metallurgical plants or by combustion of sulfur is converted to sulfur trioxide (SO₃) in a multistage converter by means of a solid catalyst, e.g. with vanadium pentoxide as active component. The SO₃ obtained is withdrawn after the contact stages of the converter and supplied to an intermediate absorber or after the last contact stage of the converter to a final absorber in which the gas containing SO₃ is guided in countercurrent or cocurrent flow to concentrated sulfuric acid and absorbed in the same.

The absorption of the SO₃ in sulfuric acid is a strongly exothermal process, so that the acid is heated up and must be cooled again. At the same time, the heat of the acid, which is distinctly > 140°C, can be utilized for steam generation and energy recovery. Various heat recovery systems are known and employed in the art, such as the so-called HEROS system implemented by the applicant (see, e.g. WO 2005/095272 A or WO 2011/091950 A) or the so-called HRS system of Monsanto as described in EP 0 499 290 B1. In the HEROS system the intermediate absorption system comprises a Venturi absorber and an intermediate absorption tower wherein in the Venturi absorber usually the main amount (80 - 90 %) of the supplied SO₃ is absorbed in sulfuric acid and only the remaining amount of SO₃ is fed into the intermediate absorption tower.

Document WO 2011/091950 A2 deals with a reliable cooling of sulfuric acid and to increase the safety of the plant. Gaseous sulfur trioxide is introduced into a Venturi absorber in cocurrent flow with concentrated sulfuric acid supplied via a conduit and is partly absorbed in the hot acid, whose concentration is increased thereby. Sulfuric acid withdrawn at the bottom of the Venturi absorber is supplied to an acid pump tank and further supplied to a shell space of the heat exchanger. Water is supplied to heat transfer elements arranged in the shell space and at least partly converted into steam by cooling the sulfuric acid. The steam generated in the heat exchanger is separated from water in a steam drum, whereby the water thus obtained is recirculated from the steam drum to the heat exchanger by means of a circulation pump.

Via a conduit the non-absorbed sulfur trioxide is introduced into an intermediate absorber, which it traverses in counterflow to concentrated sulfuric acid for further absorption. Non-absorbed sulfur trioxide is withdrawn from the top of the intermediate absorber, while the enriched sulfuric acid is withdrawn at the bottom, partly removed as product or otherwise utilized in the plant, and upon dilution with water in an acid pump tank and cooling in a heat exchanger the rest is recirculated by means of a pump via the conduit to the intermediate absorber.

Document US 2013/115159 A1 teaches a process for producing sulphuric acid, whereby enhanced recovery of energy is obtained from the absorption zone wherein SO₃ is absorbed into sulfuric acid. Energy is recovered in useful form, for example, as intermediate pressure steam. Enhanced energy recovery is achieved while preserving control of corrosion at the heat exchange surfaces that are wetted with absorption acid, and without excessive or intolerable generation of acid mist. The quantity of intermediate pressure steam than can be generated from the absorption loop can be increased.

Document WO 2008/064698 A1 teaches a process of producing concentrated sulfuric acid from a feed gas containing 0.1 vol-% to 30 vol-% SO₂. A strong feed gas containing preferably 6 vol-% to 30 vol-% SO₂ enables the gas entering the final wet condensing stage to have an acid dew point of beiow 260 °C, whilst at the same time achieving current requirements of acid mist emissions of about 20 ppmv without resorting to substantial air dilution of said strong feed gas.

The existing heat recovery systems in the intermediate absorption stage of a sulfuric acid plant, however, have disadvantages when no low pressure steam is used or upon failure of the heat recovery system. If this happens in the HRS system, the complete sulfuric acid plant has to be shut down. In the HEROS system, the Venturi absorber can be used as a gas duct into which no sulfuric acid is introduced, but due to the low irrigation rate in the intermediate absorption tower, the plant capacity has to be reduced.

### Summary of the Invention

It is the object of the present invention to allow operating a sulfuric acid plant at full scale even in case the heat recovery system does not operate.

According to the present invention this problem is solved by a process according to claim 1 which allows for a dual mode operation of the sulfuric acid plant. When the heat recovery system is in operation and low pressure steam is produced, all acid withdrawn from the 1^{st} stage absorber and from the 2^{nd} stage is circulated in the acid circuit of the 1^{st} stage absorber, while when the heat recovery system is not in operation no acid is fed to the 1^{st} stage absorber and the 2^{nd} stage is preferably exclusively fed from an independent acid circulation system, such as the acid circulation system of the final absorber or the cross flow of a drying tower as provided in conventional sulphuric acid plants.

According to a preferred embodiment of the invention, the 1^{st} stage is designed as a Venturi type absorber and the 2^{nd} stage is designed as a packed bed absorber.

When the heat recovery system is in operation, preferably the irrigation rate of the 2^{nd} stage absorber is adjusted to 5 to 30%, preferably 10 to 20% of the total acid flow required to absorb the entire SO₃ contained in the sulfur trioxide containing gas supplied to the intermediate absorption system. In this mode of operation it is according to the invention to withdraw the acid supplied to the 2^{nd} stage absorber from the acid circuit of the final absorber. The acid pump of the 2^{nd} stage absorber is preferably out of operation. The temperature below the packing is more than 130°C, preferably more than 150 °C. All heat energy generated in the intermediate absorption system is recovered in the heat recovery system.

If on the other hand the heat recovery system is not in operation, the irrigation rate of the 2^{nd} stage absorber is increased to > 90 %, preferably 100 % of the total acid flow required to absorb the entire SO₃ that is contained in the sulfur trioxide containing gas supplied to the intermediate absorption system, while no sulfuric acid is supplied to the 1^{st} stage absorber.

If the 1^{st} stage absorber is not active, in prior art plants not enough sulfuric acid is provided in the 2^{nd} stage absorber to absorb all of the SO₃ fed into the absorber. Therefore, the plant capacity has to be reduced. Contrary to that, the invention proposes to maintain the plant capacity. To this end all the SO₃ is fed into the 2^{nd} stage absorber and the acid supply to the 2^{nd} stage absorber is increased so that even the high amount of SO₃ can still be absorbed. Thereby the sulfuric acid plant can continue to operate at full scale even if the heat recovery system is out of operation.

The invention is also directed to a plant for the production of sulfuric acid according to claim 8, which is suitable to perform the process as described above. The plant consists of an intermediate absorption system having a 1^{st} stage absorber, preferably a Venturi type absorber, and a 2^{nd} stage absorber, preferably a packed bed absorber, and a heat recovery system to produce low pressure steam, wherein the 2^{nd} stage absorber comprises a distributor system for supplying the sulfuric acid onto a packing in which the acid trickles from the top to the bottom in countercurrent flow to a sulfur trioxide containing gas. The distributor system comprises two separate headers for supplying the acid to the 2^{nd} stage absorber, wherein a first header has a size larger than a second header in order to supply a larger amount of acid to the 2^{nd} stage absorber.

Below the header the distributor system comprises a distributing chamber adapted in size to the desired amount of acid to be supplied to the packing in the 2^{nd} stage absorber.

The switch over from one operating mode to the other enables the continuation of the plant operation without interruption.

The supply capacity of the first header is 4 to 20 times, preferably 5 to 10 times larger than the supply capacity of the second header.

The invention will now be described in more detail on the basis of a preferred embodiment and the drawing. All features described and/or illustrated form the subject-matter of the invention per se or in any combination, independent of their combination in the claims or their back-reference.

### Brief Description of the Drawings

- Fig. 1: schematically shows a plant for performing the process in accordance with the invention.
- Fig. 2: shows the distributor system as employed in the 2^{nd} stage absorber of the plant according to Fig. 1.

### Detailed Description of a Preferred Embodiment

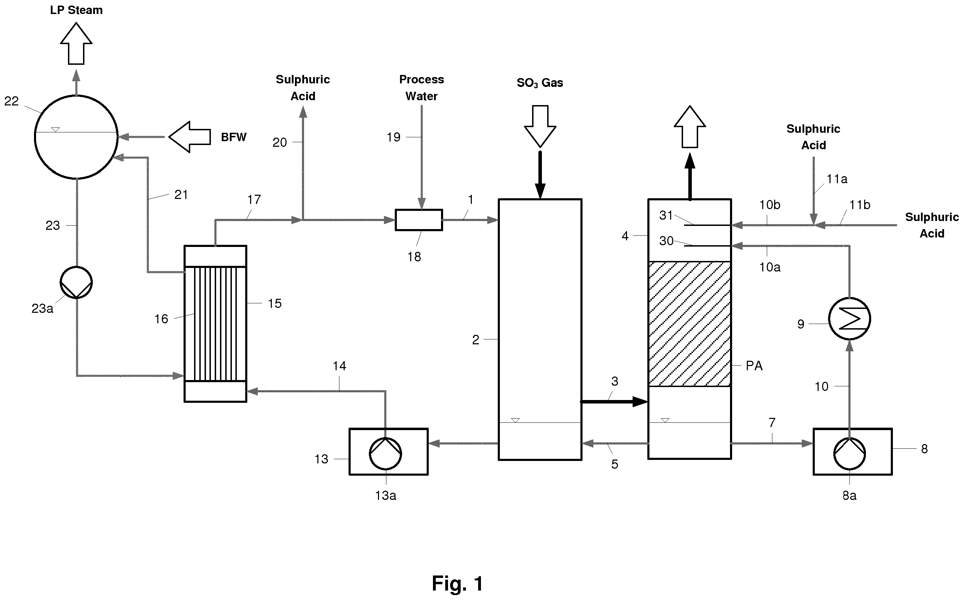

As can be taken from the flow diagram of the process of the invention shown in Fig. 1, a gas containing sulfur trioxide (SO₃) from a non-illustrated converter for converting SO₂ into SO₃ is introduced into a 1^{st} stage absorber 2 in cocurrent flow with concentrated sulfuric acid supplied via a conduit 1. The SO₃ is at least partly absorbed in the hot acid thereby increasing the acid concentration. Via a conduit 3 the non-absorbed sulfur trioxide is introduced into a 2^{nd} stage absorber 4. The SO₃ containing gas traverses the 2^{nd} stage absorber 4 in countercurrent flow to concentrated sulfuric acid for further absorption. The process gas is withdrawn from the 2^{nd} stage absorber 4. The enriched sulfuric acid is withdrawn at the bottom of the 2^{nd} stage absorber via conduit 5. Upon dilution with water in an acid pump tank 8 or in the sump of the 2^{nd} stage absorber 4 and cooling in a heat exchanger 9 the rest is recirculated by means of a pump 8a via the conduit 10a to the 2^{nd} stage absorber 4 (acid circuit of the 2^{nd} stage absorber).

The irrigation system by which the acid is supplied in the 2^{nd} stage absorber 4 to trickle from above through a packing PA may basically correspond to a system as described in applicant's international patent application PCT/EP2008/005668 (WO 2009/015723 A1).

Sulfuric acid withdrawn at the bottom of the 1^{st} stage absorber 2 is introduced into an acid pump tank 13 and from there supplied by means of a pump 13a via the conduit 14 into a heat exchanger 15 located at a higher level, in which the acid is cooled by means of water.

The heat exchanger 15 preferably is a shell and tube heat exchanger with a plurality of acid-conveying tubes 16 serving as heat transfer elements. Alternatively, a plate heat exchanger or a conventional kettle-type boiler can be used. The water evaporation heat exchanger 15 is fed on the water-side by preferably forced circulation via pump 23a, or alternatively by natural circulation.

Via conduit 17, the cooled acid flows into a mixing chamber 18 in which its concentration is adjusted to the desired value by means of process feed water supplied via conduit 19, before the sulfuric acid is supplied to the top of the 1^{st} stage absorber 2. Part of the acid can be branched off via a conduit 20.

Boiler feed water (BFW) is supplied to a steam drum 22. To produce low pressure (LP) steam using the heat transmitted from heat exchanger 15, BFW is recirculated via line 23 and pump 23a through said heat exchanger 15 and eventually returned as a water/steam mixture back to steam drum 22 via conduit 21. At the steam drum 22, water and steam are segregated. The steam is withdrawn from the top of steam drum 22.

Since the heat exchanger 15 is arranged above the acid pump tank 13, the acid automatically runs back into the acid pump tank 13 merely by gravity when the pump 13a is switched off.

The plant is designed for a dual mode operation wherein in a first mode of operation, when the heat recovery system is working to produce LP steam in heat exchanger 15, all acid from the 1^{st} stage absorber 2 and the 2^{nd} stage absorber 4 is circulated in the acid circuit of the heat recovery system by pump 13a. In this case the acid pump 8a of the 2^{nd} stage absorber 4 is out of operation. The irrigation rate of the 2^{nd} stage absorber 4 is reduced to 5 to 30%, preferably 10 to 20% of the total acid flow which would be required to absorb the entire SO₃ contained in the sulfur trioxide containing gas supplied to the intermediate absorption system. The temperature of the acid below the packing PA in the 2^{nd} stage absorber 4 is > 130 °C, preferably > 150 °C. The additional acid required for the 2^{nd} stage absorber 4 is supplied from the final absorption circuit through conduit 11b. In this mode of operation, the preferred irrigation rate in the 2^{nd} stage absorber 4 is 4-10 m³/m²*h. The acid from the 2^{nd} stage absorber 4 is flowing to the pump tank 13 via the sump of the 1^{st} stage absorber 2 through conduit 5. If the heat recovery system is in operation basically all heat generated in the intermediate absorption system is recovered to produce LP steam.

In case the heat recovery system is out of operation, no acid is fed to the 1^{st} stage absorber 2. In this case, the 2^{nd} stage absorber 4 is fed with acid of the 2^{nd} stage absorber system consisting of pump tank 8, pump 8a, acid cooler 9 and associated conduits 7, 10 and 10a. The acid pump 13a of the heat recovery system is out of operation. The irrigation rate of the 2^{nd} stage absorber 4 is adjusted to 100% of the total acid flow required to absorb the entire SO₃ supplied to the intermediate absorption system. The 1^{st} stage absorber 2 works as a gas duct only. In this mode of operation, the preferred irrigation rate in the 2^{nd} stage absorber 4 is typically 35 - 60 m³/m²*h.

The switch over between the two operation modes enables the continuation of the plant operation without interruption or the demand for a capacity decrease. Usually the switch over is done by starting the non-operating acid circuit and shutting down the other one once both circuits are fully operating.

The header 31 is basically fed via conduit 10b by two acid conduits, 11a and 11b. In heat recovery mode, conduit 11b originates from the final absorption tower circuit while conduit 11a originates from the drying tower cross flow.

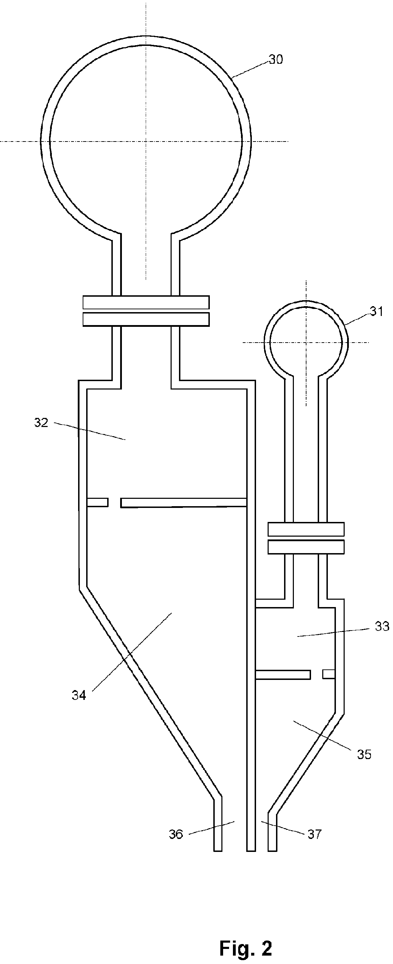

As shown in Fig. 2 the distributor system for supplying the sulfuric acid to the 2^{nd} stage absorber 4 comprises two separate headers 30, 31. Header 30 is used in the operation mode without heat recovery while header 31 is used in the operation mode with heat recovery. However header 31 is continuously used to fed the cross flow from the drying tower to the 2^{nd} stage absorber, irrespective of the plant operation mode. Consequently, header 30 has a size larger than header 31 in order to supply a larger amount of acid to the 2^{nd} stage absorber 4. The supply capacity of header 30 is 4 to 20 times, preferably 5 to 10 times larger than the supply capacity of header 31, so that both headers are able to provide the respective desired irrigation rates for the two operating modes.

In the operation mode without heat recovery the acid is supplied to header 30 through conduit 10a from the acid pump tank 8. In both operation modes the acid is supplied to header 31 via conduit 10b directly from the final absorption circuit through conduit 11b and the cross flow from the drying tower through conduit 11a.

From headers 30, 31 the acid enters into collecting chambers 32 and 33, respectively, provided below the headers 30, 31, from where it is discharged into subsequent distributing chambers 34 and 35, respectively, and passed at the desired rate to the packing PA through channels 36 and 37, respectively.

**List of reference numbers:**

| | |
|---|---|
| 1 | conduit |
| 2 | 1^{st} stage absorber, e.g. Venturi absorber |
| 3 | conduit |
| 4 | 2^{nd} stage absorber, e.g. packed bed tower |
| 5 | conduit |
| 7 | conduit |
| 8 | acid pump tank |
| 8a | pump |
| 9 | heat exchanger |
| 10, 10a, 10b | conduits |
| 11a, 11b | conduits |
| 13 | acid pump tank |
| 13a | pump |
| 14 | conduit |
| 15 | heat exchanger |
| 16 | tubes |
| 17 | conduit |
| 18 | mixing chamber |
| 19 - 21 | conduits |
| 22 | steam drum |
| 23 | conduit |
| 23a | pump |
| 30 | header |
| 31 | header |
| 32, 33 | collecting chambers |
| 34, 35 | distributing chambers |
| 36, 37 | channels |
| BFW | boiler feed water PA packing |

## Claims

1. A process for operating a plant for the production of sulfuric acid, wherein a sulfur trioxide containing gas is supplied to an intermediate absorption system or to a final absorber to be at least partly absorbed in sulfuric acid, wherein the intermediate absorption system comprises a two-stage absorption system, wherein the 1^{st} stage is a cocurrent absorber, and wherein the 2^{nd} stage is designed as countercurrent absorber, and wherein the plant further comprises a heat recovery system to produce low pressure steam by using the heat generated by the exothermic absorption of the sulfur trioxide in the sulfuric acid, **characterized in that**
a) when the heat recovery system is in operation, all acid withdrawn from the 1^{st} stage absorber and from the 2^{nd} stage absorber is circulated in an acid circuit of the 1^{st} stage absorber, and
b) when the heat recovery system is not in operation, no acid is fed to the 1^{st} stage absorber and the 2^{nd} stage absorber is fed from an independent acid circulation system.

2. The process according to claim 1, **characterized in that** the 1^{st} stage is designed as a Venturi type absorber and that the 2^{nd} stage is designed as a packed bed absorber.

3. The process according to claim 1 or 2, **characterized in that** when the heat recovery system is in operation, an irrigation rate of the 2^{nd} stage absorber is adjusted to 5 to 30%, preferably 10 to 20% of the total acid flow required to absorb the entire SO₃ contained in the sulfur trioxide containing gas supplied to the intermediate absorption system.

4. The process according to claim 1 to 3, **characterized in that** when the heat recovery system is in operation, the acid supplied to the 2^{nd} stage absorber is withdrawn from an acid circuit of the final absorber.

5. The process according to any of the preceding claims, **characterized in that** the acid supplied to the 2^{nd} stage absorber is a combination of acid withdrawn from an acid circuit of the final absorber and cross flow acid supplied from a drying tower system.

6. The process according to any of the preceding claims, wherein in the 2^{nd} stage absorber the sulfur trioxide is guided through a packing in countercurrent flow to sulfuric acid irrigated from above the packing, **characterized in that** when the heat recovery system is in operation the temperature below the packing is adjusted to more than 130 °C, preferably more than 150°C.

7. The process according to claim 1 or 2, **characterized in that** when the heat recovery system is not in operation, an irrigation rate of the 2^{nd} stage absorber is adjusted to > 90 %, preferably about 100% of the total acid flow required to absorb the entire SO₃ contained in the sulfur trioxide containing gas supplied to the absorption system, while no sulfuric acid is supplied to the 1^{st} stage absorber.

8. A plant for the production of sulfuric acid, comprising an intermediate absorption system having a 1^{st} stage absorber (2) and a 2^{nd} stage absorber (4), and a heat recovery system to produce low pressure steam, wherein the 2^{nd} stage absorber (4) comprises a distributor system for supplying the sulfuric acid onto a packing (PA) in which the acid trickles from the top to the bottom in countercurrent flow to a sulfur trioxide containing gas, **characterized by** two separate headers (30, 31) for supplying the acid to the 2^{nd} stage absorber (4), wherein a first header (30) has a size larger than a second header (31) in order to supply a larger amount of acid to the 2^{nd} stage absorber.

9. The plant according to claim 8, **characterized in that** below the headers (30, 31) the distributor system comprises distributing chambers (34, 35) adapted in size to the desired amount of acid to be supplied to the packing (PA) in the 2^{nd} stage absorber (4).

10. The plant according to any of claims 8 to 9, **characterized in that** the supply capacity of the first header (30) is 4 to 20 times, preferably 5 to 10 times larger than the supply capacity of the second header (31).

## Patentansprüche

1. Ein Verfahren von Betreiben einer Anlage für die Herstellung von Schwefelsäure, wobei ein Schwefeltrioxid enthaltendes Gas einem Zwischenabsorptionssystem oder einem finalen Absorber zugeführt wird, um es wenigstens teilweise in Schwefelsäure zu absorbieren, wobei das Zwischenabsorptionssystem ein Zweistufenabsorptionssystem beinhaltet, wobei die erste Stufe ein Gleichstromabsorber ist und wobei die zweite Stufe als Gegenstromabsorber ausgestaltet ist und wobei die Anlage weiterhin ein Wärmerückgewinnungssystem zur Produktion von Niedrigdruckdampf enthält, welches die bei der exothermen Absorption von dem Schwefeltrioxid in Schwefelsäure generierte Wärme nutzt, **dadurch gekennzeichnet, dass**
a) wenn das Wärmerückgewinnungssystem in Betrieb ist, alle aus der ersten Absorptionsstufe und aus der zweiten Absorptionsstufe abgezogene Säure in einen Säurekreislauf der ersten Absorptionsstufe zirkuliert wird und
b) wenn das Wärmerückgewinnungssystem nicht in Betrieb ist, keine Säure zu der ersten Absorptionsstufe und aus einem unabhängigen Säurezirkulationssystem Säure in dir zweite Absorptionsstufe geführt wird.

2. Verfahren gemäß Anspruch 1, **dadurch gekennzeichnet, dass** die erste Stufe als Venturiabsorber und die zweite Stufe als Festbettabsorber ausgestaltet ist.

3. Verfahren nach Anspruch 1 oder 2, **dadurch gekennzeichnet, dass**, wenn das Wärmerückgewinnungssystem in Betrieb ist, in der zweite Absorptionsstufe eine Berieselungsrate von 5 bis 30 %, bevorzugt 10 bis 20 % des Gesamtsäurestroms eingestellt wird, welcher zur Absorption des gesamten SO₃ benötigt wird, welches in dem Schwefeltrioxid enthaltenen Gasstrom der dem Zwischenabsorptionssystem zugeführt wird, enthalten ist.

4. Verfahren nach einem der Ansprüche 1 bis 3, **dadurch gekennzeichnet, dass** wenn das Wärmerückgewinnungssystem in Betrieb ist, die der zweiten Absorptionsstufe zugeführte Säure aus einem Säurekreislauf des finalen Absorbers abgezogen wird.

5. Verfahren nach einem der vorhergehenden Ansprüche, **dadurch gekennzeichnet, dass** die dem zweiten Stufenabsorber zugeführte Säure eine Kombination von aus einem Säurekreislauf des finalen Absorbers abgezogene Säure und einem Querstrom von aus einem Trockenturmsystem zugeführter Säure ist.

6. Verfahren nach einem der vorhergehenden Ansprüche, wobei in der zweiten Absorptionsstufe Schwefeltrioxid durch das Festbett im Gegenstrom zu oberhalb des Festbettes eingerieselten Schwefelsäure geführt wird, **dadurch gekennzeichnet, dass**, wenn das Wärmerückgewinnungssystem in Betrieb ist, die Temperatur unterhalb des Festbettes auf mehr als 130 °C, bevorzugt mehr als 150 °C, eingestellt wird.

7. Verfahren nach einem der Ansprüche 1 oder 2, **dadurch gekennzeichnet, dass** wenn das Wärmerückgewinnungssystem nicht in Betrieb ist, in der zweite Absorptionsstufe eine Berieselungsrate von > 90 %, bevorzugt 100 % von der Gesamtsäurestrom eingestellt wird, welcher zur Absorption des gesamten SO₃ benötigt wird, welches in dem Schwefeltrioxid enthaltenen Gasstrom der dem Zwischenabsorptionssystem zugeführt wird, enthalten ist, während keine Schwefelsäure der ersten Absorptionsstufe zugeführt wird.

8. Eine Anlage zur Herstellung von Schwefelsäure, enthalten ein Zwischenabsorptionssystem mit einer ersten Absorptionsstufe (2) und einer zweiten Absorptionsstufe (4) und einem Wärmerückgewinnungssystem zur Herstellung von Niedrigdruckdampf, wobei die zweite Absorptionsstufe (4) ein Verteilersystem enthält, um die Schwefelsäure auf ein Festbett (PA) zu führen, in das die Säure von oben zum Boden im Gegenstrom zu dem Schwefeltrioxid enthaltenen Gas tröpfelt, **dadurch gekennzeichnet, dass** zwei separate Aufgabeköpfe (30, 31) zur Zuführung der Säure in der zweiten Absorptionsstufe (4) vorgesehen sind, wobei ein erster Aufgabekopf (30) eine Größe größer als der zweite Aufgabenkopf (31) hat, so dass eine größere Menge von Säure auf die zweite Absorptionsstufe (4) gegeben wird.

9. Eine Anlage gemäß Anspruch 8, **dadurch gekennzeichnet, dass** unterhalb der Aufgabeköpfe (30, 31) das Verteilsystem Verteilkammern (34, 35) aufweist, welche auf die Größe des gewünschten Säuregehaltes zur Zuführung auf das Festbett (PA) der zweiten Absorptionsstufe (4) angepasst sind.

10. Eine Anlage nach einem der Ansprüche 8 oder 9, **dadurch gekennzeichnet, dass** die Zufuhrkapazität des ersten Aufgabekopfes 4 bis 20 mal, bevorzugt 5 bis 10 mal größer als die Zufuhrkapazität des zweiten Aufgabekopfes (31) ist.

## Revendications

1. Procédé de fonctionnement d'une installation de production d'acide sulfurique, dans lequel un gaz contenant du trioxyde de soufre est alimenté dans un système d'absorption intermédiaire ou dans un absorbeur final afin d'être au moins partiellement absorbé dans l'acide sulfurique, dans lequel le système d'absorption intermédiaire comprend un système d'absorption à deux étages, dans lequel le 1er étage est un absorbeur à courant parallèle et dans lequel le 2ème étage est conçu comme un absorbeur à contre-courant, et dans lequel l'installation comprend en outre un système de récupération de chaleur afin de produire de la vapeur à basse pression en utilisant la chaleur générée par l'absorption exothermique du trioxyde de soufre dans l'acide sulfurique, **caractérisé en ce que**
a) quand le système de récupération de chaleur est en fonctionnement, tout l'acide extrait du 1er étage d'absorbeur et du 2ème étage d'absorbeur est mis en circulation dans un circuit d'acide du 1er étage d'absorbeur, et
b) quand le système de récupération de chaleur n'est pas en fonctionnement, aucun acide n'est alimenté dans le 1er étage d'absorbeur et le 2ème étage d'absorbeur est alimenté à partir d'un système de circulation d'acide indépendant.

2. Procédé selon la revendication 1, **caractérisé en ce que** le 1er étage est conçu comme un absorbeur du type Venturi et le 2ème étage est conçu comme un absorbeur à lit tassé.

3. Procédé selon la revendication 1 ou 2, **caractérisé en ce que** lorsque le système de récupération de chaleur est en fonctionnement, un taux d'irrigation du 2ème étage d'absorbeur est ajusté de 5 à 30%, de préférence de 10 à 20% du flux d'acide total nécessaire pour absorber la totalité du SO₃ contenu dans le gaz contenant du trioxyde de soufre alimenté dans le système d'absorption intermédiaire.

4. Procédé selon la revendication 1 à 3, **caractérisé en ce que** lorsque le système de récupération de chaleur est en fonctionnement, l'acide alimenté dans le 2ème étage d'absorbeur est extrait d'un circuit d'acide de l'absorbeur final.

5. Procédé selon une quelconque des revendications précédentes, **caractérisé en ce que** l'acide alimenté dans le 2ème étage d'absorbeur est une combinaison d'acide extrait d'un circuit d'acide de l'absorbeur final et un acide à flux croisé alimenté à partir d'un système de tour de séchage.

6. Procédé selon une quelconque des revendications précédentes, dans lequel dans le 2ème étage d'absorbeur le trioxyde de soufre est guidé à travers un tassement en flux à contre-courant de l'acide sulfurique irrigué à partir du sommet du tassement, **caractérisé en ce que** lorsque le système de récupération de chaleur est en fonctionnement la température au-dessous du tassement est ajustée à plus de 130°C, de préférence plus de 150°C.

7. Procédé selon la revendication 1 ou 2, **caractérisé en ce que** lorsque le système de récupération de chaleur ne fonctionne pas, un taux d'irrigation du 2ème étage d'absorbeur est ajusté à > 90%, de préférence environ 100% du flux d'acide total nécessaire pour absorber la totalité du SO₃ contenu dans le gaz contenant du trioxyde de soufre alimenté dans le système d'absorption, alors que l'acide sulfurique n'est pas alimenté dans le 1er étage d'absorbeur.

8. Installation pour la production d'acide sulfurique, comprenant un système d'absorption intermédiaire ayant un 1er étage d'absorbeur (2) et un 2ème étage d'absorbeur (4), et un système de récupération de chaleur pour produire de la vapeur à basse pression, dans lequel le 2ème étage d'absorbeur (4) comprend un système de distributeur pour alimenter l'acide sulfurique sur un tassement (PA) dans lequel l'acide s'écoule goutte à goutte du haut vers le bas en flux à contre-courant d'un gaz contenant du trioxyde de soufre, **caractérisé par** deux collecteurs séparés (30,31) pour alimenter l'acide dans le 2ème étage d'absorbeur (4), dans lequel un premier collecteur (30) a une taille plus grande qu'un second collecteur (31) de manière à alimenter une plus grande quantité d'acide dans le 2ème étage d'absorbeur.

9. Installation selon la revendication 8, **caractérisé en ce que** au-dessous des collecteurs (30,31) le système de distributeur comprend des chambres de distribution (34,35) adaptées en taille à la quantité souhaitée d'acide à alimenter dans le tassement (PA) dans le 1ème étage d'absorbeur.

10. Installation selon une quelconque des revendications 8 à 9, **caractérisé en ce que** la capacité d'alimentation du premier collecteur (30) est 4 à 20 fois, de préférence 5 à 10 plus grande que la capacité d'alimentation du seconde collecteur (31).
